# FASCICULE DE BREVET EUROPEEN

(11) **EP 1 342 391 B1**
(45) Date de publication et mention de la délivrance du brevet: **18.07.2007**
(21) Numéro de dépôt: 01271029.9
(22) Date de dépôt: 07.12.2001
(51) Int. Cl.: H05B 6/70

(54) **TRAITEMENT PAR MICRO-ONDES D'OBJETS ET DE PIECES UNITAIRES**
MIKROWELLENBEHANDLUNG VON OBJEKTEN UND EINZELNEN WERKSTÜCKEN
MICROWAVE TREATMENT OF OBJECTS AND SINGLE-PIECE COMPONENTS

(30) Priorité: 11.12.2000 FR 0016089
(43) Date de publication de la demande: 10.09.2003
(73) Titulaire: CENTRE NATIONAL DE LA RECHERCHE SCIENTIFIQUE (CNRS), 75016 Paris (FR)
(72) Inventeur: DELMOTTE, Michel, F-92340 Bourg la Reine (FR); MORE, Claude, F-75015 Paris (FR)
(74) Mandataire: Habasque, Etienne J. Jean-François
(86) Numéro de dépôt international: PCT/FR2001/003890
(87) Numéro de publication internationale: WO 2002/049397

(56) Documents cités:
- EP-B- 0 122 840
- FR-A- 2 650 775
- US-A- 5 543 605

## Description

La présente invention est relative au traitement par micro-ondes notamment d'objets agroalimentaires ou domestiques ou de pièces industrielles et se rapporte plus particulièrement aux dispositifs du type précité destinés au traitement par micro-ondes de pièces unitaires.

Le chauffage par micro-ondes d'objets unitaires ou de produits en nappe conduit généralement à une structuration nette de la distribution spatiale des sources de chaleur d'origine électromagnétique et en conséquence, à une structuration de la distribution de la température.

Cette distribution spatiale de la température est le résultat final des contributions de deux phénomènes :
a) les réflexions des ondes par les interfaces constituées par les limites physiques des objets.
   Ces réflexions se manifestent par un phénomène de nature interférentielle sous forme d'une alternance de zones à température élevée et de points froids et concernent les objets dont les dimensions sont de l'ordre de grandeur de la longueur d'onde ;
b) l'atténuation de la densité d'énergie apportée par les ondes au sein des mêmes objets.
   L'atténuation est visible sur des objets dont les dimensions sont grandes par rapport à la longueur d'onde ou dont la caractéristique diélectrique d'absorption est élevée (supérieure à 1).

Ces deux phénomènes, réflexion des ondes et atténuation avaient été observés et étudiés en laboratoire sur des dispositifs à micro-ondes spécifiques appelés applicateurs, toujours complètement remplis de divers produits ou matériaux, ces derniers étant les produits à transformer par chauffage ou étant des diélectriques propres à la constitution de la charge spécifique des applicateurs.

Ces applicateurs, tel que l'applicateur décrit par le document EP-B-0 122 840, sont toujours caractérisés par la présence de masses importantes de matériaux diélectriques qui servent d'adaptateurs d'interface d'entrée et d'interface de sortie des applicateurs ou qui permettent de choisir des coefficients globaux d'atténuation convenables.

Ces applicateurs sont par exemple des moules-applicateurs pour la mise en oeuvre de matériaux composites ou des autoclaves-applicateurs pour le chauffage particulier de nombreux réactifs.

L'apport le plus avancé en termes de potentialités d'utilisation des résultats des recherches en laboratoire est la mise en évidence et la possibilité d'évaluation d'une compensation de l'atténuation des ondes.

Une telle compensation se réalise par la mise en oeuvre de masses diélectriques d'épaisseur ou de caractéristique de permittivité variable dans le sens de la propagation, éventuellement constituées de couches de matériaux différents.

L'invention concerne une application des mêmes concepts fondamentaux à la situation d'objets dont les dimensions sont comprises entre le centimètre et au maximum de l'ordre du mètre, placés dans des applicateurs monomodes ou multimodes peu chargés.

Elle a donc pour objet un dispositif de traitement d'objets par micro-ondes comportant un applicateur et des objets à chauffer disposés dans ledit applicateur, caractérisé en ce qu'il comporte en autre, disposés dans l'applicateur, des moyens diélectriques d'adaptation d'impédance ayant des formes et des dimensions adaptées aux objets à traiter et aux caractéristiques des modes de propagation des ondes.

Suivant d'autres caractéristiques :
- les moyens diélectriques d'adaptation sont des pièces en un matériau diélectrique dont la permittivité est la plus voisine possible de la permittivité moyenne des objets à chauffer ;
- les moyens diélectriques d'adaptation ont des volumes de forme prismatique, pyramidale ou conique dont une base est égale à au moins une partie d'une section de l'objet à chauffer et dont la hauteur est limitée aux conditions de remplissage de l'applicateur ;
- lesdits moyens diélectriques comportent des pointes formant adaptateurs d'interfaces disposées par rapport à l'objet à traiter suivant au moins une des trois dimensions de l'espace ;
- les moyens diélectriques d'adaptation comprennent un tube ayant une cavité interne cylindrique et une forme extérieure comportant une portion intermédiaire de révolution et deux portions d'extrémité de forme tronconique se rétrécissant à partir de la portion de révolution et, accolées aux extrémités du tube formant adaptateur de propagation, des pièces coniques pleines formant adaptateurs d'interface ;
- la portion intermédiaire de révolution a une forme extérieure cylindrique ;
- la portion intermédiaire de révolution est formée de troncs de cônes accolés par leurs grandes bases ou par leurs petites bases ;
- pour le chauffage d'objets parallélépipédiques, le dispositif comporte au moins un guide d'ondes prolongé par une antenne prismatique disposée du côté d'au moins une face d'au moins un objet et les moyens diélectriques d'adaptation comprennent une pièce prismatique logée dans ladite antenne, et en ce que la surface libre de la pièce diélectrique prismatique est située en contact avec la face correspondante de l'objet parallélépipédique à chauffer ;
- lorsque ledit au moins un objet doit rester accessible pour d'autres opérations, un intervalle d'air est ménagé entre lesdits moyens d'adaptation et la surface dudit objet de forme parallélépipédique, la valeur dudit intervalle d'air étant fonction des permittivités diélectriques du matériau de la pièce à chauffer et des moyens diélectriques d'adaptation ;
- la valeur de l'intervalle d'air est inférieure ou égale à un nombre entier de demi-longueurs d'onde du mode de propagation ;
- les moyens diélectriques d'adaptation comportent une portion intermédiaire de forme parallélépipédique dans laquelle est ménagée une empreinte pour l'objet à chauffer et deux pointes prismatiques accolées par leurs bases aux extrémités de la portion intermédiaire et dont les arêtes opposées auxdites bases, sont disposées transversalement à la direction de propagation des ondes par rapport auxdits moyens diélectriques d'adaptation, lesdites pointes prismatiques formant adaptateurs d'interface ;
- pour favoriser la propagation dans l'objet à chauffer, plusieurs matériaux diélectriques de permittivité différentes sont associés en créant ainsi un gradient de permittivité ;
- lorsque les pièces diélectriques desdits moyens d'adaptation sont constituées de couches de différents matériaux, c'est la permittivité de la couche médiane qui a une valeur voisine de celle des objets à chauffer ;
- il comporte, disposé dans un applicateur, un transporteur à bande en matériau ayant une permittivité diélectrique adaptée aux objets à traiter, ledit transporteur à bande étant déplaçable dans un intervalle défini par les bases d'adaptateurs d'interfaces, placés au-dessus et au-dessous de la bande et comportant des alvéoles de réception d'objets à traiter par micro-ondes tels que de barquettes de produits alimentaires.

L'invention sera mieux comprise à la lecture de la description qui va suivre, donnée uniquement à titre d'exemple et faite en se référant aux dessins annexés, sur lesquels :
- la Fig.1 est une vue schématique en perspective éclatée d'un premier mode de réalisation d'applicateur avec adaptateur d'impédance suivant l'invention ;
- la Fig.2 est une vue schématique en perspective d'un autre mode de réalisation d'applicateur avec adaptateur d'impédance suivant l'invention ;
- la Fig.3 est une vue schématique en perspective d'un autre mode de réalisation d'applicateur avec adaptateur d'impédance suivant l'invention ; et
- la Fig.4 est une vue schématique en perspective d'encore un mode de réalisation d'applicateur avec adaptateur d'impédance suivant l'invention.

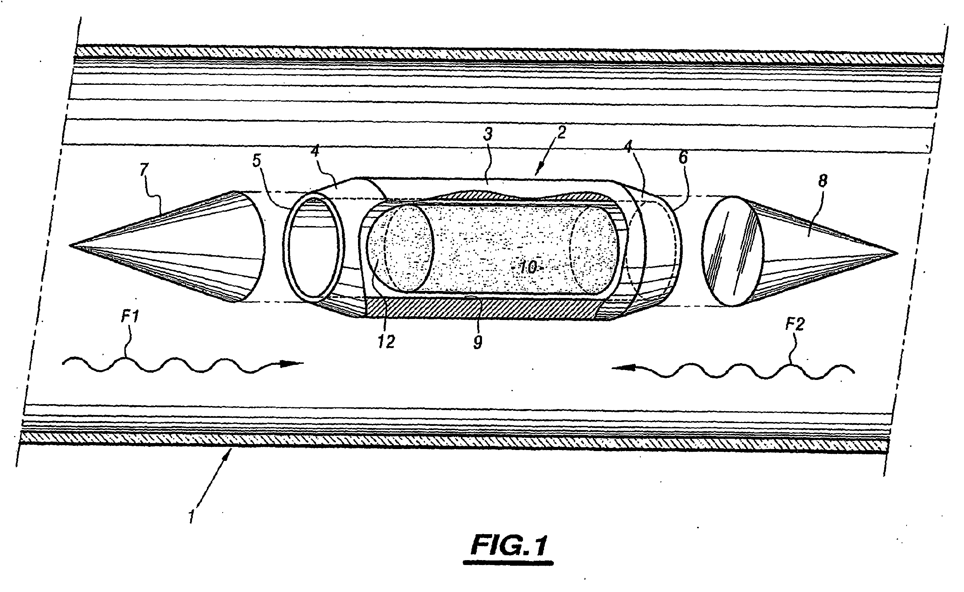

Sur la figure 1, on a représenté schématiquement en perspective éclatée, un applicateur pour le chauffage par micro-ondes d'un objet cylindrique.

L'applicateur comporte un tube métallique 1 formant guide d'ondes dans lequel est disposé un adaptateur comportant un tube 2 de diamètre inférieur à celui de l'applicateur et comprenant une portion intermédiaire 3 de forme extérieure cylindrique et deux portions d'extrémité 4 de forme extérieure tronconique se rétrécissant à partir de la portion intermédiaire 3.

Les deux extrémités 5,6 des portions tronconiques 4 opposées à la portion intermédiaire 3 sont prolongées par des cônes pleins 7,8.

Le tube 2 comporte une cavité cylindrique 9 dans laquelle est disposé un produit 10 à chauffer.

Ce produit 10 qui s'étend pratiquement sur la longueur du tube 1 a une section inférieure à la section de la cavité 9 du tube 2.

Il comporte une portion d'extrémité 12 par exemple de forme hémisphérique, ou de forme quelconque.

Les pièces 2,7 et 8 sont accolées.

Les cônes pleins 7,8 forment adaptateurs d'interface, alors que le tube 2 forme adaptateur de propagation.

Bien que dans le mode de réalisation de la figure 1, la portion intermédiaire de révolution 3 ait une surface extérieure de forme cylindrique, cette surface extérieure peut être formée de troncs de cône accotés par leurs grandes bases ou par leurs petites bases.

Les reliefs de la surface extérieure du tube ainsi obtenus permettent d'adapter la propagation des ondes en vue d'obtenir une uniformité du chauffage de la pièce traitée, sur toute sa longueur.

L'adaptateur 3,7,8, est placé dans l'applicateur 1 sur des supports non représentés disposés de façon que leurs interfaces soient parallèles au champ électrique de l'onde de propagation dans l'applicateur.

Les moyens d'adaptation sont réalisés en des matériaux dont la permittivité est la plus voisine possible de la permittivité moyenne des pièces à chauffer tout au moins dans la partie médiane de ces moyens d'adaptation suivant les caractéristiques du ou des modes de propagation choisis.

Les matériaux constitutifs de ces moyens d'adaptation sont essentiellement des matériaux composites dont la matrice peut être facilement mise en oeuvre par moulage ou par usinage.

Ces matériaux sont par exemple des silicones, du PTFE, des polyoléphines.

La charge de la matrice, principalement minérale, peut être facilement ajustée et présente des propriétés diélectriques intéressantes.

Les matériaux de charge sont par exemple le mica, l'alumine, l'oxyde de titane, le verre, le quartz.

Les sens de propagation des ondes sont indiqués par les flèches F1 et F2.

On peut choisir d'utiliser des ondes se propageant dans l'un ou l'autre des sens indiqués par les flèches F1 et F2 ou encore dans les deux sens simultanément.

On peut également choisir que les ondes se propagent en alternance dans les sens des flèches F1 et F2, si l'atténuation des ondes est faible.

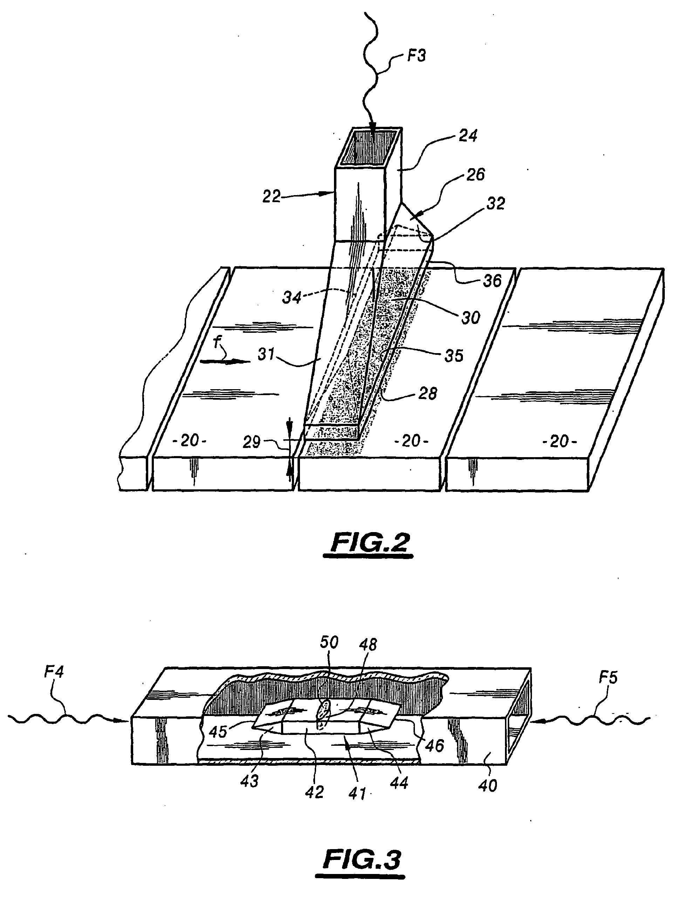

Selon le mode de réalisation de la figure 2, les produits à chauffer 20 sont des produits en blocs parallélépipédiques de forte épaisseur qui peuvent être déplacés sur ou sous le dispositif de chauffage à micro-ondes ou encore dans celui-ci.

Ce dispositif de chauffage comprend un applicateur 22 formé d'un guide d'ondes rectangulaire 24 terminé par une antenne prismatique métallique creuse 26.

L'extrémité rectangulaire 28 de l'antenne 26 tournée vers le produit 20 à chauffer est dans le présent exemple, séparée dudit produit par un intervalle d'air 29 qui contribue à l'adaptation de l'interface du produit et qui est nécessaire pour rendre le produit accessibles à d'autres traitements tels qu'un refroidissement superficiel par circulation d'un fluide ou autre.

Dans l'antenne prismatique creuse 26 est logé un adaptateur d'interface en forme de prisme plein 30 dont les faces d'extrémité 31,32 sont jointes par une arête 34 et dont la base 35 et prolongée dans une portion parallélépipédique 36. Cette portion parallélépipédique affleure l'extrémité rectangulaire 28 de l'antenne 26.

La surface de l'adaptateur d'interface 30 qui est tournée vers le produit et qui affleure l'extrémité 28 de l'antenne 26 peut également être en contact avec la surface de l'objet parallélépipédique 20 à chauffer.

Le sens de propagation des ondes est indiqué par la flèche F3.

Lors du déplacement de l'applicateur 22 dans le sens de la flèche f, le long des produits 20 à chauffer, lesdits produits sont chauffés par zones successives délimitées par la dimension de l'antenne 26.

Bien que le dispositif de la figure 2 comporte un seul applicateur à guide d'onde disposé au-dessus des objets 20 à traiter, il est possible de prévoir plusieurs applicateurs disposés côte à côte le long du trajet de déplacement des objets. Il est également possible de disposer un ou plusieurs applicateurs de ce type au-dessous des objets 20.

L'applicateur représenté à la figure 3 comporte un guide d'ondes rectangulaire 40 dans lequel est disposé un adaptateur 41 comportant une portion intermédiaire de forme parallélépipédique 42 et deux pointes prismatiques 43,44 accolées par leurs bases aux extrémités de la portion intermédiaire 42 et dont les arêtes 45,46 opposées auxdites bases sont disposées transversalement à la direction de propagation des ondes dans le guide d'ondes 40.

Comme dans l'exemple de la figure 1, les ondes peuvent se propager dans le guide 40 dans les deux sens indiqués par les flèches F4 et F5, alternativement ou simultanément.

Dans la portion centrale 42 de l'adaptateur est ménagée une cavité 48 dans laquelle est placé un objet à chauffer 50 de forme complémentaire à celle de la cavité.

Les pointes prismatiques 43 et 44 forment des adaptateurs d'interface.

Le choix de la disposition desdites pointes prismatiques formant adaptateurs d'interface est guidé par les interfaces produisant la réflexion la plus intense.

Ainsi, des adaptateurs prismatiques placés en position supérieure ou inférieure par rapport aux objets sont tout à fait envisageables.

En position inférieure, les adaptateurs peuvent faire partie des moyens de support des objets à chauffer.

Dans d'autres cas, ces adaptateurs seront partie intégrante de moyens de convoyage tels que tapis, transporteurs à bande, soles amovibles ou autres.

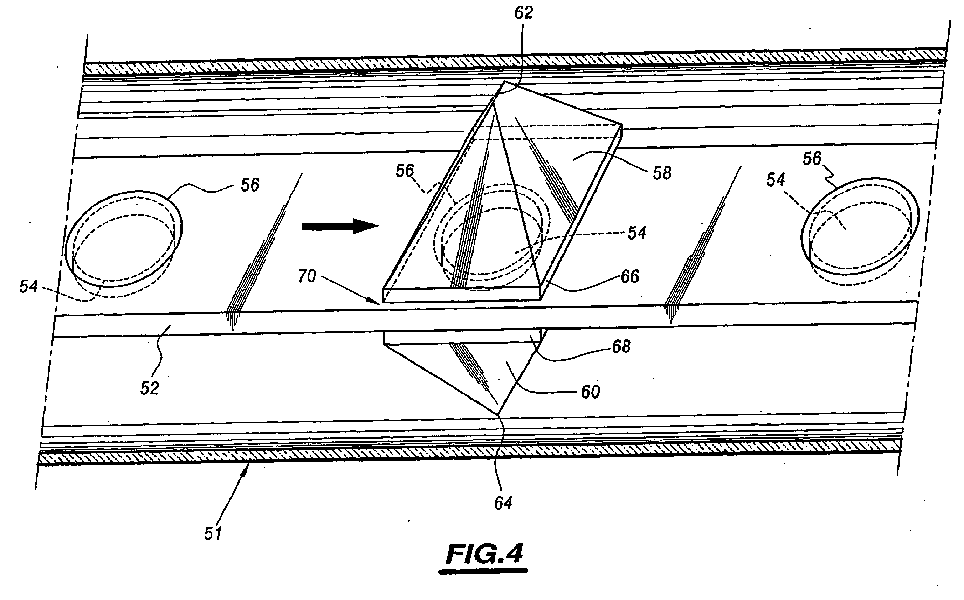

A la figure 4, on a représenté schématiquement en perspective, un mode de réalisation de dispositif de traitement d'objets par micro-ondes suivant l'invention qui comporte monté dans un applicateur 51, un transporteur à bande 52 dans lequel sont ménagés des alvéoles 54 pour des objets à traiter par micro-ondes tels que des barquettes 56 de produits alimentaires.

Le transporteur dont seul le brin intérieur à l'applicateur est représenté, est réalisé en un matériau de permittivité diélectrique adaptée au traitement thermique du contenu des barquettes 56.

Sur le trajet du transporteur 52 sont disposés des adaptateurs d'interface 58,60, placés au-dessus et au-dessous de la bande 52. Ces adaptateurs d'interfaces sont formés par des pyramides ayant chacune une pointe en forme d'arête 62,64 et se faisant face par leurs bases 66,68.

La bande 52 est déplacée dans l'intervalle 70 ménagé dans les adaptateurs d'interfaces 58 et 60.

On voit dans ce mode de réalisation que les adaptateurs d'interfaces 58,60 sont orientés suivant une direction générale normale à la direction de déplacement des objets 56 sur le transporteur à bande 52.

Cette orientation des adaptateurs d'interfaces est dans ce cas, compte tenu de la forme et de la disposition des objets 56, l'orientation optimale selon laquelle les interfaces 58,60 produisent la réflexion la plus intense.

La disposition des pointes formant adaptateurs peut donc être choisie par rapport aux objets à traiter suivant au moins une des trois dimensions de l'espace.

Dans les dispositifs qui viennent d'être décrits en référence aux dessins, il est possible pour favoriser la propagation dans l'objet à chauffer, de réaliser au moins certains des moyens d'adaptation diélectrique par association de plusieurs matériaux diélectriques de permittivités différentes en créant ainsi une structure multicouches permettant d'assurer la maîtrise de l'atténuation des ondes.

Une telle structure multicouches permet en particulier d'améliorer les performances des adaptateurs de propagation.

Dans le cas de l'utilisation de telles structures multicouches, c'est la couche médiane qui a une permittivité diélectrique voisine de la permittivité moyenne de l'objet à chauffer.

Les domaines d'utilisation des outillages diélectriques suivant l'invention sont ceux où l'élévation de la température des objets de façon uniforme dans l'espace est indispensable.

Il s'agit d'abord de produits des industries agroalimentaires pour lesquels la sécurité alimentaire impose que le champ de température nécessaire à la décongélation, la pasteurisation, voire la stérilisation soit uniforme dans l'espace.

Il s'agit aussi de produits techniques.

On peut envisager la cuisson d'objets en résine thermodurcissable quand elle ne nécessite pas l'utilisation d'un moule avec application d'une pression mécanique.

C'est ainsi que l'invention est avantageusement utilisée pour le chauffage de colles, de produits d'enduction, de produits réactifs stockés à basse température (-70°C à -20°C) et jusqu'à la température ambiante ou de mise en oeuvre.

## Revendications

1. Dispositif de traitement d'objets par micro-ondes comprenant un applicateur (1 ; 24,26 ; 40 ; 51) et des objets à chauffer disposés dans ledit applicateur, **caractérisé en ce qu'**il comporte en autre disposés dans l'applicateur, des moyens diélectriques (2,7,8 ; 30 ;41 ; 52,58,60) d'adaptation d'impédance, lesdits moyens diélectriques ayant d'une part au moins une forme complémentaire de celle des objets à traiter et, d'autre part, au moins une extrémité saillante de section en pointe, ladite extrémité saillante étant exposée aux rayonnements micro-ondes, et **en ce que** les moyens diélectriques d'adaptation (2,7,8 ; 30 ; 41 ; 52,58,60) sont des pièces en un matériau diélectrique dont la permittivité est la plus voisine possible de la permittivité moyenne des objets à chauffer.

2. Dispositif de traitement d'objets selon la revendication 1, **caractérisé en ce que** les moyens diélectriques d'adaptation (2,7,8; 30;41;52, 58,60) ont des volumes dont une base est égale à au moins une partie d'une section de l'objet à chauffer et dont la hauteur est limitée aux conditions de remplissage de l'applicateur (1;24,26;40;51).

3. Dispositif de traitement d'objets selon la revendication 1 ou 2, **caractérisé en ce que** lesdits moyens diélectriques (2, 7, 8; 30; 41; 52, 58, 60) comportent des pointes formant adaptateurs d'interfaces disposées par rapport à l'objet à traiter suivant au moins une des trois dimensions de l'espace.

4. Dispositif de traitement d'objets suivant l'une des revendications 2 et 3, **caractérisé en ce que** les moyens diélectriques d'adaptation comprennent un tube (2) ayant une cavité interne (9) cylindrique et une forme extérieure comportant une portion intermédiaire (3) de révolution et deux portions d'extrémité (4) de forme tronconique se rétrécissant à partir de la portion de révolution et, accolées aux extrémités du tube (2) formant adaptateur de propagation, des pièces coniques pleines (7,8) formant adaptateurs d'interface.

5. Dispositif de traitement d'objets suivant la revendication 4, **caractérisé en ce que** la portion intermédiaire de révolution (3) a une forme extérieure cylindrique.

6. Dispositif de traitement d'objets suivant la revendication 4, **caractérisé en ce que** la portion intermédiaire de révolution est formée de troncs de cônes accolés par leurs grandes bases ou leurs petites bases.

7. Dispositif de traitement d'objets suivant l'une des revendications 2 et 3, pour le chauffage d'objets de forme parallélépipédique, **caractérisé en ce qu'**il comporte au moins un guide d'ondes (24) prolongé par une antenne prismatique (26) disposé du côté d'au moins une face d'au moins un objet (20), et **en ce que** les moyens diélectriques d'adaptation comprennent une pièce prismatique (30) logée dans ladite au moins une antenne (26).

8. Dispositif de traitement d'objets suivant la revendication 7, **caractérisé en ce que** la surface libre de la pièce diélectrique prismatique est située en contact avec l'objet parallélépipédique à chauffer.

9. Dispositif de traitement d'objets suivant la revendication 7, **caractérisé en ce que** lorsque ledit au moins un objet doit rester accessible pour d'autres opérations, un intervalle d'air (29) est ménagé entre lesdits moyens d'adaptation et la surface dudit objet de forme parallélépipédique (20), la valeur dudit intervalle d'air (29) étant fonction des permittivités diélectriques du matériau de l'objet (20) à chauffer et des moyens diélectriques d'adaptation (30).

10. Dispositif de traitement d'objets suivant la revendication 9, **caractérisé en ce que** la valeur de l'intervalle d'air (29) est inférieure ou égale à un nombre entier de demi-longueurs d'onde du mode de propagation.

11. Dispositif de traitement d'objets suivant l'une des revendications 2 et 3, **caractérisé en ce que** les moyens diélectriques d'adaptation (41) comportent une portion intermédiaire de forme parallélépipédique dans laquelle est ménagée une empreinte (48) pour l'objet à chauffer (50) et deux pointes prismatiques (43,44) accolées par leurs bases aux extrémités de la portion intermédiaire (42) et dont les arêtes (54,56) opposées auxdites bases, sont disposées transversalement à la direction de propagation des ondes par rapport auxdits moyens diélectriques d'adaptation, lesdites pointes prismatiques (43,44) formant adaptateurs d'interface.

12. Dispositif de traitement d'objets suivant l'une des revendications 1 à 11, **caractérisé en ce que** pour favoriser la propagation dans l'objet à chauffer, plusieurs matériaux diélectriques de permittivités différentes sont associés en créant ainsi un gradient de permittivité.

13. Dispositif de traitement d'objets suivant la revendication 12, **caractérisé en ce que** lorsque les pièces diélectriques desdits moyens d'adaptation sont constituées de couches de différents matériaux, c'est la permittivité de la couche médiane qui a une valeur voisine de la permittivité moyenne des objets à chauffer.

14. Dispositif de traitement d'objets suivant l'une des revendications 1 à 13, **caractérisé en ce qu'**il comporte, disposé dans un applicateur (51), un transporteur à bande (52) en matériau ayant une permittivité diélectrique adaptée aux objets à traiter, ledit transporteur à bande étant déplaçable dans un intervalle (70) défini par les bases (66,68) d'adaptateurs d'interfaces (58,60), placés au-dessus et au-dessous de la bande et comportant des alvéoles (54) de réception d'objets à traiter par micro-ondes tels que des barquettes (56) de produits alimentaires.

## Claims

1. Device for treatment of objects by microwaves, comprising an applicator (1; 24, 26; 40; 51) and objects to be heated which are arranged in said applicator, **characterised in that** it further includes, arranged in the applicator, dielectric impedance-adaptation means (2, 7, 8; 30, 41; 52, 58, 60), said dielectric means having, on the one hand, at least one shape complementary to that of the objects to be treated and, on the other hand, at least one projecting end having a pointed cross-section, said projecting end being exposed to the microwave radiation, and **in that** the dielectric adaptation means (2, 7, 8; 30; 41; 52, 58, 60) are components consisting of a dielectric material, the permittivity of which is as close as possible to the average permittivity of the objects to be heated.

2. Device for treatment of objects according to Claim 1, **characterised in that** the dielectric adaptation means (2, 7, 8; 30; 41; 52, 58, 60) have volumes, a base of which is equal in area to at least a part of a cross-section of the object to be heated, and the height of which is limited to the conditions of filling of the applicator (1; 24, 26; 40; 51).

3. Device for treatment of objects according to Claim 1 or 2, **characterised in that** said dielectric means (2, 7, 8; 30; 41; 52, 58, 60) include tips forming interface adapters which in relation to the object to be treated are arranged along at least one of the three dimensions of space.

4. Device for treatment of objects according to one of Claims 2 and 3, **characterised in that** the dielectric adaptation means comprise a tube (2) having a cylindrical internal cavity (9) and an external shape including an intermediate portion (3) of revolution and two end portions (4) of frustoconical shape tapering away from the portion of revolution and, coupled to the ends of the tube (2) forming a propagation adapter, solid conical components (7, 8) forming interface adapters.

5. Device for treatment of objects according to Claim 4, **characterised in that** the intermediate portion of revolution (3) has a cylindrical external shape.

6. Device for treatment of objects according to Claim 4, **characterised in that** the intermediate portion of revolution is formed by truncated cones coupled by their large bases or by their small bases.

7. Device for treatment of objects according to one of Claims 2 and 3 for the heating of objects of parallelepipedal shape, **characterised in that** it includes at least one waveguide (24) extended by a prismatic antenna (26) arranged on the side of at least one face of at least one object (20), and **in that** the dielectric adaptation means comprise a prismatic component (30) housed in said at least one antenna (26).

8. Device for treatment of objects according to Claim 7, **characterised in that** the free surface of the prismatic dielectric component is situated in contact with the parallelepipedal object to be heated.

9. Device for treatment of objects according to Claim 7, **characterised in that** when said at least one object has to remain accessible for other operations an air gap (29) is provided between said adaptation means and the surface of said object of parallelepipedal shape (20), the value of said air gap (29) being a function of the dielectric permittivities of the material of the object (20) to be heated and of the dielectric adaptation means (30).

10. Device for treatment of objects according to Claim 9, **characterised in that** the value of the air gap (29) is less than or equal to a whole number of half-wavelengths of the propagation mode.

11. Device for treatment of objects according to one of Claims 2 and 3, **characterised in that** the dielectric adaptation means (41) include an intermediate portion of parallelepipedal shape, in which there is provided an indentation (48) for the object to be heated (50), and two prismatic tips (43, 44) coupled by their bases to the ends of the intermediate portion (42), the ridges (54, 56) of which opposite said bases are arranged transverse to the direction of propagation of the waves in relation to said dielectric adaptation means, said prismatic tips (43, 44) forming interface adapters.

12. Device for treatment of objects according to one of Claims 1 to 11, **characterised in that** in order to favour propagation in the object to be heated several dielectric materials having different permittivities are linked, thus creating a permittivity gradient.

13. Device for treatment of objects according to Claim 12, **characterised in that** when the dielectric components of said adaptation means are constituted by layers of different materials the permittivity of the median layer has a value close to the average permittivity of the objects to be heated.

14. Device for treatment of objects according to one of Claims 1 to 13, **characterised in that** it includes, arranged in an applicator (51), a belt conveyor (52) consisting of a material having a dielectric permittivity adapted to the objects to be treated, said belt conveyor being displaceable in a gap (70) defined by the bases (66, 68) of interface adapters (58, 60) which are placed above and below the belt and which include cells (54) for receiving objects to be treated by microwaves, such as trays (56) for food products.

## Patentansprüche

1. Vorrichtung zur Behandlung von Objekten mit Mikrowellen, mit einer Appliziereinrichtung (1;24,26;40;51) und zu erwärmenden Objekten in der Appliziereinrichtung, **dadurch gekennzeichnet, dass** sie außerdem in der Appliziereinrichtung dielektrische Mittel (2,7,8;30;41;52,58,60) zur Anpassung der Impedanz umfaßt, welche dielektrischen Mittel einerseits eine Form aufweisen, die komplementär ist zu derjenigen der zu behandelnden Objekte und andererseits wenigstens ein vorspringendes Ende mit spitzenförmigem Querschnitt aufweisen, welches vorspringende Ende der Mikrowellenbestrahlung ausgesetzt ist, sowie **dadurch**, dass die dielektrischen Anpassungsmittel (2,7,8;30;41;52,58,60) Teile aus einem dielektrischen Material sind, deren Permittivität möglichst nah an der mittleren Permittivität der zu erwärmenden Objekte liegt.

2. Vorrichtung zur Behandlung von Objekten gemäß Anspruch 1, **dadurch gekennzeichnet, dass** die dielektrischen Anpassungsmittel (2,7,8;30;41;52,58,60) Volumina aufweisen, deren eine Basis gleich wenigstens einem Teil des Querschnitts des zu erwärmenden Objekts ist und dessen Höhe begrenzt ist entsprechend dem Füllungsgrad der Appliziereinrichtung (1;24,26;40;51).

3. Vorrichtung zur Behandlung von Objekten gemäß Anspruch 1 oder 2, **dadurch gekennzeichnet, dass** die dielektrischen Mittel (2,7,8;30;41;52,58,60) Spitzen aufweisen, die Übergangsadapter bilden, die in bezug auf das zu behandelnde Objekt entsprechend wenigstens einer der drei Dimensionen im Raum angeordnet sind.

4. Vorrichtung zur Behandlung von Objekten gemäß einem der Ansprüche 2 und 3, **dadurch gekennzeichnet, dass** die dielektrischen Anpassungsmittel ein Rohr (2) umfassen, das einen zylindrischen inneren Hohlraum (9) aufweist und eine äußere Form mit einem mittleren, rotationssymmetrischen Abschnitt und zwei Endbereichen (4) in Kegelstumpfform, die von dem mittleren Bereich aus zusammenlaufen, und verbunden mit den Enden des Rohres (2) zur Bildung eines Ausbreitungsadapters zwei Vollkegelteile (7,8), die Übergangsadapter darstellen, aufweist.

5. Vorrichtung zur Behandlung von Objekten gemäß Anspruch 4, **dadurch gekennzeichnet, dass** der mittlere rotationssymmetrische Abschnitt (3) eine äußere Zylinderform aufweist.

6. Vorrichtung zur Behandlung von Objekten gemäß Anspruch 4, **dadurch gekennzeichnet, dass** der mittlere rotationssymmetrische Abschnitt aus Kegelstümpfen gebildet ist, die mit ihren großen Basen oder ihren kleinen Basen verbunden sind.

7. Vorrichtung zur Behandlung von Objekten gemäß einem der Ansprüche 2 und 3, für die Erwärmung quaderförmiger Objekte, **dadurch gekennzeichnet, dass** die Vorrichtung wenigstens eine Wellenführung (24) umfaßt, die durch eine prismatische Antenne (26) verlängert ist, die auf der Seite der wenigstens einen Fläche des wenigstens einen Objekts (20) angeordnet ist und dass die dielektrischen Anpassungsmittel ein prismatisches Stück (30) umfassen, das in der wenigstens einen Antenne (26) liegt.

8. Vorrichtung zur Behandlung von Objekten gemäß Anspruch 7, **dadurch gekennzeichnet, dass** die freie Oberfläche des dielektrischen prismatischen Teils in Berührung mit dem zu erwärmenden, quaderförmigen Objekt liegt.

9. Vorrichtung zur Behandlung von Objekten gemäß Anspruch 7, **dadurch gekennzeichnet, dass** bei der Behandlung des wenigstens einen Objektes das wenigstens eine Objekt zugänglich bleiben sollte für andere Operationen, wobei sich ein Luftintervall zwischen den Anpassungsmitteln und der Oberfläche des quaderförmigen Objekts befindet, wobei der Wert des Luftintervalls (29) eine Funktion der dielektrischen Permittivität des Materials des zu beheizenden Objekts (20) und der dielektrischen Anpassungsmittel (30) ist.

10. Vorrichtung zur Behandlung von Objekten gemäß Anspruch 9, **dadurch gekennzeichnet, dass** die Stärke des Luftintervalls (29) geringer oder gleich einem ganzen Zahl der Halbwellenlänge des Ausbreitungsmodus ist.

11. Vorrichtung zur Behandlung von Objekten gemäß Anspruch 2 und 3, **dadurch gekennzeichnet, dass** die dielektrischen Anpassungsmittel (41) einen mittleren Abschnitt in Quaderform umfassen, in dem sich ein Platz (48) für ein zu erwärmendes Objekt (50) befindet, sowie zwei prismatische Spitzen (43,44), die mit ihren Basen mit den Enden des mittleren Abschnitts (42) verbunden sind, und deren den Basen gegenüberliegende Kanten (54,56) quer zur Ausbreitungsrichtung der Wellen angeordnet sind, bezogen auf die dielektrischen Anpassungsmittel, wobei die prismatischen Kanten (42,44) Übergangsadapter bilden.

12. Vorrichtung zur Behandlung von Objekten gemäß einem der Ansprüche 1 bis 11, **dadurch gekennzeichnet, dass** zur Förderung der Ausbreitung der Wellen in dem zu erwärmenden Objekt mehrere dielektrische Materialien mit unterschiedlicher Permittivität verbunden sind, so dass sie einen Permittivitäts-Gradienten bilden.

13. Vorrichtung zur Behandlung von Objekten gemäß Anspruch 12, **dadurch gekennzeichnet, dass**, wenn die dielektrischen Teile der Anpassungsmittel gebildet werden aus Lagen unterschiedlichen Materials, die mittlere Lage mit ihrer Permittivität einen Wert aufweist, der in der Nähe der mittleren Permittivität des zu erwärmenden Objekts ist.

14. Vorrichtung zur Behandlung von Objekten gemäß einem der Ansprüche 1 bis 13, **dadurch gekennzeichnet, dass** sie in der Appliziereinrichtung (51) einen Bandförderer (52) aus einem Material aufweist, das eine dielektrische Permittivität aufweist, die angepaßt ist an die zu behandelnden Objekte, wobei der Bandförderer in einem Intervall (70) bewegbar ist, das gebildet wird durch die Basen (66,68) des Übergangsadapters (58,60), der sich oberhalb und unterhalb des Bandes befindet und Aufnahmen (54) für zu behandelnde Objekte wie Schalen mit Lebensmittelprodukten aufweist.
